# EUROPEAN PATENT APPLICATION

(11) **EP 1 688 084 A1**
(43) Date of publication of application: **09.08.2006**
(21) Application number: 05107901.0
(22) Date of filing: 29.08.2005
(51) Int. Cl.: A61B 3/00, A61B 6/04, A61G 15/12, A61K 33/24, A01N 59/16

(54) **Antimicrobial patient support device for medical equipment**

(30) Priority: 02.02.2005 JP 2005001086 U
(71) Applicant: Makino Ophtalmic Instrument Co., Ltd., Tokyo 113-0033 (JP)
(72) Inventor: Makino, Toshimi, Tokyo (JP)
(74) Representative: Jannig, Peter

(57) **Abstract**

An object of the present invention is to provide sanitary patient support device of medical equipment such as the headrest, chinrest, and head support constituted of antimicrobial material, to fulfill the desirable hygiene. The present invention of patient support device of medical equipment, as the headrest, chinrest, and head support of said patient support device constituted of powdered antimicrobial material tempered with thermoplastic resin, as polypropylene resin, polycarbonate resin, and polystyrene resin, will be provided.

## Description

The present invention relates to a patient support device of medical equipment, specifically the headrest, chinrest, and head support of the said patient support device that is made of material constituted of powdered antimicrobial agent tempered with thermoplastic resin as polypropylene resin, polycarbonate resin, and polystyrene resin.

Slit lamps, surgical operation microscopes, and tonometers (fundoscopy) employed during ophthalmic surgery (and neurosurgery) are also known as ophthalmic equipments used for ophthalmic diagnosis. These medical equipments, equipped with inclusive or optional imaging (camera) and display devices, are employed in capturing images of the condition of the diseased area and treatment effect, which are viewed on a display device as a monitor. This created a need to secure and stabilize the face of patient examined. It is also necessary to secure and stabilize the face of patient to film a panoramic x-ray when dental radiography unit is employed.

This sort of ophthalmic equipment and dental equipment are always equipped with parts necessary to stabilize the examinee's heads and faces, such as headrests, chinrests, and head supports

Moreover, clean paper is used to cover headrests, chinrests, and head supports for the purpose of patient hygiene and replaced after each use, when the above mentioned medical equipments are employed.

These medical equipments are not always fixed in examination rooms and operation rooms, but are also employed as portable equipments in traveling clinics, at which miniscule time consuming process can be inconvenient and problematic in either case.

Kokai (Jpn. Unexamined patent publication) No. 7-231874 "Face support and ophthalmic device," Kokai No. 8-182672 "Panoramic dental x-ray unit, " and Kohyo (Jpn. Unexamined patent publication) No. 8-500392 "Molding of denatured material and applied denatured material, and antimicrobial coating of medical equipment" are also proposed as the same sort of medical equipment.

Although the above mentioned Kokai No. 7-231874 "Face support and ophthalmic device" is for mechanically well-devised headrest and chinrest, it does not reveal antimicrobial processing of headrest and chinrest. Kokai No. 8-182672 "Panoramic dental x-ray unit" is distinguished by the mechanism of its revolving arm, and does not devise the stabilization method of the photographed object, whereas Kohyo No. 8-500392 "Molding of denatured material and applied denatured material, and antimicrobial coating of medical equipment" is characterized by the application of antimicrobial coating substance to the medical equipment as its antimicrobial processing method..

When employing the above mentioned medical equipment, its headrest, chinrest and head supports are covered with clean paper that is replaced after each use for the purpose of patient hygiene, which is a time consuming factor as the said medical equipment is not only employed in examination rooms and operation rooms in which they are fixed, but are also transported and employed in traveling clinics. Therefore, it is favorable for the headrest, chinrest, and head support themselves to be composed of antimicrobial material.

The present invention had been considered under these said circumstances, characterized by the headrest, chinrest, and head supports of patient support device constituted of powdered antimicrobial agent tempered with thermoplastic resin such as polypropylene resin, polycarbonate resin, and polystyrene resin. The patient support device is provided as a component of medical equipments, wherein the aforesaid medical equipments are distinctly ophthalmic examination equipments, as well as panoramic dental x-ray units.

Fig. is a lateral view of patient support device of medical equipment, according to the present invention, applied to an ophthalmic slit lamp.

Fig.2 is a lateral view of patient support device of medical equipment, according to the present invention, applied to a non-contact tonometer (fundoscopy).

Fig.3 is a front view of patient support device of medical equipment, according to the present invention, applied to a panoramic dental x-ray unit.

The preferred embodiments to exploit the present invention are described in detail below with references to the drawings.

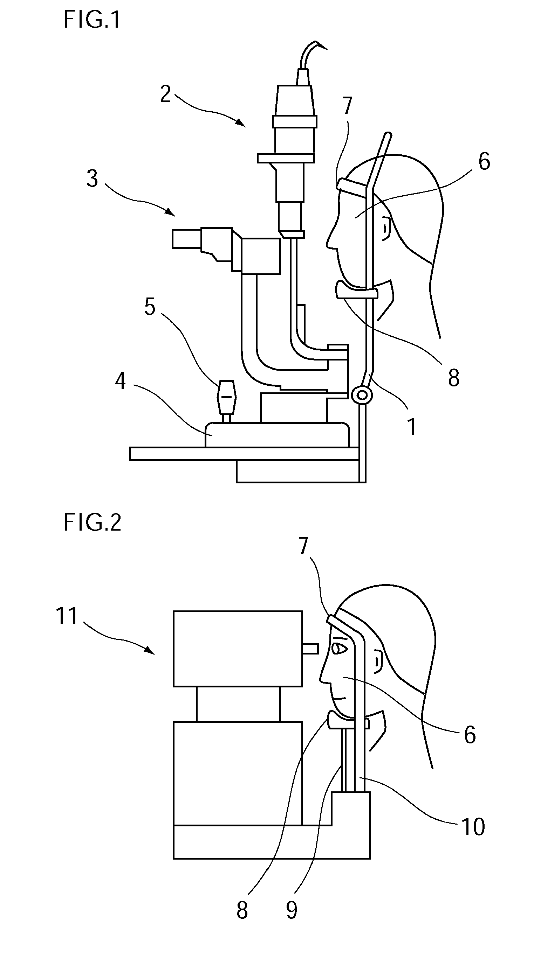

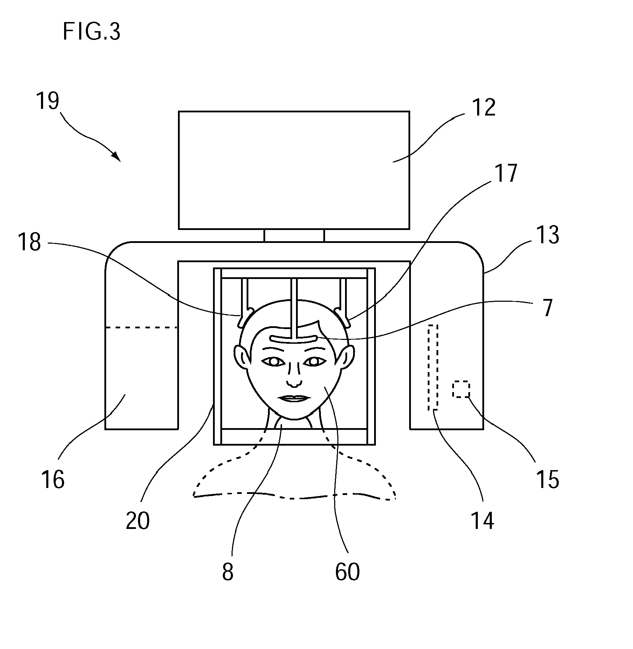

Of the drawings, Fig.1 is a lateral view of which the present invention, of the patient support device of medical equipment, had been applied to the ophthalmic slit lamp. Fig.2 is a lateral view of which the present invention, of the patient support device of medical equipment, had been applied to the non-contact tonometer (fundoscopy). Fig.3 is a front view of which the present invention, of the patient support device of medical equipment, had been applied to the panoramic dental x-ray unit.

Fig.1 represents an example of one embodiment, in which the present invention is applied to the slit lamp. Light travels from the slit lamp's light source (2) through lenses (not shown), irradiating the patient's eye, which is observed by the ophthalmologist through microscope (3), while the joystick (5) is operated simultaneously to move the instrument base (4) to adjust the irradiation of slit light.

The headrest (7) and chinrest (8) are attached to prop (1), and are adjustable to stabilize the face (6) of patient. As previously stated, the headrest (7) and chinrest (8) are composed of powdered antimicrobial agent tempered with thermoplastic resin such as polypropylene resin, polycarbonate resin, and polystyrene resin.

Fig.2 also describes a situation with a non-contact tonometer (fundoscopy)(11), in which the patient's face(6) is stabilized with adjustable headrest(7) and chinrest(8) attached to prop (10), also in which elevating prop(9) allows the chinrest(8) to be height adjustable. As previously stated, the headrest (7) and chinrest(8) are composed of powdered antimicrobial agent tempered with thermoplastic resin such as polypropylene resin, polycarbonate resin, and polystyrene resin.

Moreover, Fig.3 represents a dental panoramic x-ray unit (19), to which a support frame (20) is secured(not shown), mounted with headrest (7), chinrest (8), and head supports (17, 18) to position and stabilize the photographed object(60). In this setting, the sensor beam from sensor beam source (15) determines patient positioning, thus rotating the revolving arm (13) driven by the drive unit (12), as the x-ray from x-ray source (16), exposes the patient dental panoramic x-ray film(14). In this case, the headrest(7), chinrest(8), and head supports(17,18) are also composed of powdered antimicrobial agent tempered with thermoplastic resin such as polypropylene resin, polycarbonate resin, and polystyrene resin.

The antimicrobial properties possessed by metals as silver and zinc, and compound supported powdered antimicrobial agents containing said metals are publicly known, and tempering said powdered antimicrobial agents with thermoplastic resin as polypropylene resin, polycarbonate resin, and polystyrene resin may be employed to form headrest(7), chinrest(8), and head supports(17,18).

According to the patient support device of medical equipment as described in the present invention, the headrest, chinrest, and head support themselves are constituted of antimicrobial material, omitting the necessity for the application of clean paper at the headrest, chinrest, and head support, therefore reducing the time and effort for the intricate procedure that had been necessary for the purpose of patient hygiene thus far.

## Claims

1. A patient support device of a medical equipment comprising of headrest, chirest, and head support made with material constituted of powdered antimicrobial agent and thermoplastic resin as polypropylene resin, polycarbonate resin, and polystyrene resin.

2. A patient support device of medical equipment according to claim 1, wherein the said medical equipment is an ophthalmic examination equipment.

3. A patient support device of medical equipment according to claim 1, wherein the said medical equipment is a panoramic dental x-ray unit.
